# EUROPEAN PATENT APPLICATION

(11) **EP 4 835 427 A1**
(43) Date of publication of application: **04.11.2026**
(21) Application number: 25173948.8
(22) Date of filing: 02.05.2025
(51) Int. Cl.: G01M 3/22

(54) **INSPECTION SYSTEM FOR DETECTING GAS LEAKAGE OF SEALED PACKAGES OF FOOD PRODUCTS**

(71) Applicant: Bizerba SE & Co. KG, 72336 Balingen (DE)
(72) Inventor: PIROT, Eric, 35510 Cesson-Sévigné (FR); MIOSSEC, Benjamin, 35230 Bourgbarré (FR); FONTUGNE, Christophe, 45760 Vennecy (FR); AMIGON, Loris, 22300 Lanmérin (FR)
(74) Representative: Manitz Finsterwald Patent- und Rechtsanwaltspartnerschaft mbB

(57) **Abstract**

An inspection system for detecting gas leakage of sealed packages of food products comprises a plurality of first pressure rollers fixedly mounted on a first shaft and spaced from one another, a plurality of second pressure rollers fixedly mounted on a second shaft and spaced from one another, wherein first suction nozzles and the first pressure rollers are arranged in an alternating manner along the first shaft, wherein second suction nozzles and the second pressure rollers are arranged in an alternating manner along the second shaft, and a plurality of gas sensors for detecting gas leakage of sealed packages of food products when the packages are pressurized by the pressure rollers, wherein each of the suction nozzles is associated with its own one of the gas sensors.

## Description

### FIELD

The invention relates to an inspection system for detecting gas leakage of sealed packages of food products.

### BACKGROUND

In food industry, sealed packages are used for packaging food products. In such packages, the food product may, for example, be placed on a tray and sealed with a lidding film. The package may be a vacuum seal package or a modified atmosphere package using gases such as carbon dioxide (CO2) and/or nitrogen (N2) for achieving optimum freshness and longer shelf life. Defective packages must be avoided since otherwise the food product will eventually be exposed to the environment outside the sealed tray package resulting in faster deterioration of the food product than predicated by its expiry date.

If a modified atmosphere package is defective, the protective gas will leak from the package. The amount of gas leaking from a defective package can be increased by increasing the internal pressure of the packings by applying external pressure to the packages. The increased gas leakage can then be detected to allow identifying the inspected package as being a defective package. Document WO 2017/191465 A2 discloses an apparatus for detecting such gas leakage. In document WO 2017/191465 A2, the packages are conveyed by a conveyor to and past a leak detection head arranged above the conveyer. The leak detection head comprises a rotatable drum having an axis of rotation parallel to the surface of the conveyor and perpendicular to the direction of conveyance of the conveyor, wherein the drum projects down from the leak detection head towards the conveyor. The height of the leak detection head above the conveyor is adjusted such that the distance between the conveyor and the drum is slightly smaller than the height of the packages. Thus, the at drum contacts and compresses the packages from above to force out protective gas in case there is a leakage in a package. The leak detection head further comprises air-sampling vents arranged in the vicinity of the drum for sucking in leaked gas which is transferred to an air-sample testing equipment comprising, for example, a quantum cascade laser, to detect a gas leakage.

It is an object of the present invention to provide an inspection system for detecting gas leakage of sealed packages of food products that allows to detect gas leakage even if the amount of leaked gas is very small as well as to determine the area of the package where the leakage occurs.

### SUMMARY

This object is satisfied by an inspection system according to claim 1. The inspection system for detecting gas leakages of sealed packages of food products comprises a first shaft having a first axis, a plurality of first pressure rollers fixedly mounted on the first shaft and spaced by first spaces from one another, a second shaft arranged distant to the first shaft and having a second axis arranged parallel to the first axis, and a plurality of second pressure rollers fixedly mounted on the second shaft and spaced by second spaces from one another. The inspection system further comprises at least one suction port connectable to a vacuum pump, a plurality of first suction nozzles connected to the at least one suction port, the first suction nozzles and the first pressure rollers being arranged in an alternating manner along the first shaft forming a first alternating arrangement with (exactly) one first suction nozzle being arranged in each of the first spaces, a plurality of second suction nozzles connected to the at least one suction port, the second suction nozzles and the second pressure rollers being arranged in an alternating manner along the second shaft forming a second alternating arrangement with (exactly) one second suction nozzle being arranged in each of the second spaces, and a plurality of gas sensors interposed between the at least one suction port and the first and second suction nozzles for detecting gas leakage of sealed packages of food products when the packages are pressurized by the first and second pressure rollers. Each of the first and second suction nozzles is associated with its own one of the gas sensors.

According to the invention, pressure rollers for applying pressure to the sealed packages and suction nozzles for sucking in gas leaking from the packages due to the applied pressure are arranged in an alternating manner and, thus, very close to each other. Due to this close proximity of pressure rollers and suction nozzles, all gas forced out of defective packages by the pressure rollers is collected by the suction nozzles. Since no leaked gas gets lost, even small amounts of leaked gas can be traced allowing to detect gas leakage even if the amount of leaked gas is very small. Having two alternating arrangements of pressure rollers and suction nozzles allows to increase the area where pressure is applied to a package, thus decreasing the chance that gas relocates within the package instead of leaking from the package. In addition, the fact that each suction nozzle has its own gas sensor allows to identify the area where a package is defective which in turn allows to find out about deficiencies in the manufacturing process, in particular if the same area is affected repeatedly. Later manual inspection of a defective package might not be possible if the leakage is very small.

The sealed packages may be, for example, sealed tray packages or sealed flow packs. The term "plurality of pressure rollers fixedly mounted on the shaft" includes that the plurality of pressure rollers and the shaft are formed integrally. An inspection apparatus may comprise the inspection system and a transportation system, in particular a conveyor, configured to transport the sealed packages along a transport path in a transport direction, preferably wherein the inspection system is arranged above the transportation system, and/or wherein the first and second axis of the first and second shafts of the inspection system are arranged parallel to a surface of the transportation system and perpendicular to the transport direction.

In an embodiment, the first and second alternating arrangements are offset to each other with respect to the direction of the first and second axes such that each of the first pressure rollers is aligned with a second suction nozzle and each of the second pressure rollers is aligned with a first suction nozzle when viewed from a direction lying in a plane perpendicular to the direction of the first and second axes. This results in a more uniform distribution of pressure rollers and suction nozzles increasing the above-mentioned advantages.

In another embodiment, the inspection system further comprises a gas distribution plate having an inner gas passage system that connects each of the first and second suction nozzles to the at least one suction port. Using a plate with integrated gas passages as a gas distributor instead of a manifold with hoses, tubes and/or pipes allows a very compact design of the inspection system. A plate with integrated gas passages can be manufactured in a cost-effective manner by drilling passages in a metal or plastic plate and by plugging them where required. Alternatively, the plate can be manufactured by 3D printing.

In another embodiment, the gas sensors are attached to an upper side of the gas distribution plate, wherein the inner gas passage system comprises, for each of the gas sensors, an inlet passage connected to the respective gas sensor and an outlet passage connected to the respective gas sensor. The gas sensors being attached to the upper side of the gas distribution plate contributes to a very compact design of the inspection system. By having an inlet passage and an outlet passage, it is possible to detect the gas leaked from a pressurized package while being sucked through the gas sensors.

In particular, each inlet passage is connected to the first or second suction nozzle associated with the respective gas sensor, and/or all outlet passages are connected to the at least one suction port via at least one connecting passage. While the inlet passages do not connect with each other, the outlet passages do connect with each other via the at least one connecting passage which contributes to a very compact design of the inspection system.

More particularly, the at least one suction port comprises a first suction port and a second suction port and the at least one connecting passage comprises a first connecting passage and a second connecting passage, wherein the outlet passages connected to the gas sensors associated with the first suction nozzles are connected to the first suction port via the first connecting passage, and wherein the outlet passages connected to the gas sensors associated with the second suction nozzles are connected to the second suction port via the second connecting passage. Since the suction nozzles are divided into two groups of first and second suction nozzles it may be advantageous to maintain this concept in order to provide uniform operating conditions to all of the gas sensors as much as possible.

To that effect it is advantageous when the first connecting passage and the second connecting passage are oriented in parallel to each other and/or when the inlet and outlet passages connected to the gas sensors associated with the first suction nozzles are arranged in an alternating manner and lined up in a first row, and when the inlet and outlet passages connected to the gas sensors associated with the second suction nozzles are arranged in an alternating manner and are lined up in a second row.

In another embodiment, the first suction port is attached to the gas distribution plate at a first front side of the gas distribution plate and the second suction port is attached to the gas distribution plate at a second front side of the gas distribution plate opposite of the first front side. For certain designs of the inspection system, this may facilitate connecting the gas distribution plate to a vacuum pump.

In another embodiment, the inlet passages and the at least one connecting passage are straight passages, and the outlet passages are L-formed passages and/or the inlet passages are oriented vertically, the at least one connecting passage is oriented horizontally, and first branches of the outlet passages are oriented vertically and second branches of the outlet passages are oriented horizontally. This contributes to a very compact design of the inspection system.

In another embodiment, each of the first and second suction nozzles is funnel-shaped, preferably with a rectangular, in particular square, inner and/or outer cross-section at the bottom and a round inner cross-section at the top. **In** this way, the intake of the gas leaking from a defective pressurized package can be maximized on the one hand and the inspection system can be held compact on the other hand. A rectangular cross-section allows an almost full "coverage" of the inspected area of a package with pressure rollers and suction nozzles since any free space between pressure rollers and suction nozzles can be largely avoided.

In another embodiment, the inspection system further comprises a first sensor unit having at least one third suction nozzle connectable to the vacuum pump and at least one gas sensor associated with the at least one third suction nozzle, and a second sensor unit having at least one fourth suction nozzle connectable to the vacuum pump and at least one gas sensor associated with the at least one fourth suction nozzle, the first sensor unit and the second sensor unit being arranged next to a first front side and next to a second front side opposite of the first front side, respectively, of the two alternating arrangements in extension of the first and second axis of the first and second shafts, wherein the at least one third suction nozzle and the at least one fourth suction nozzle are directed towards each other and are directed perpendicular to the first and second suction nozzles, wherein the first and second suctions nozzles and the at least one third suction nozzle and the at least one fourth suction nozzle together form a U-shaped gate for the sealed packages for allowing the sealed packages to be inspected from three directions. Thus, possible leakage cannot only be detected at areas on top of the packages but also at areas on two opposing sides of the packages. This may be of particular advantage in case of sealed tray packages. One reason for a defective sealed tray package may be that a part of the packaged food product itself gets jammed between the tray and the lidding film of the sealed tray package in the region of the sealing seam. This can create a leakage path for gas in the sealing seam. Leaked gas then exits to the sides rather than on the top of the package. Further, sealed flow packs may be oriented in a transverse direction when transported through the U-shaped gate formed by the suction nozzles to allow the sealed ends of the flow packs to be inspected by the first and second sensor units.

In another embodiment, the inspection system further comprises a support plate for the first alternating arrangement and the second alternating arrangement, and optionally for the above-mentioned gas distribution plate and/or the above-mentioned first sensor unit and the above-mentioned second sensor unit, wherein the first alternating arrangement and the second alternating arrangement, and optionally the first sensor unit and the second sensor unit, are arranged at a lower side of the support plate, and optionally the distribution plate is arranged at an upper side of the support plate. The gas distribution plate may not be ideally suited for attaching the above-named parts to it because of its inner gas passage system. Thus, it may be advantageous to provide a separate support plate for this purpose. Of course, connection lines between the suction nozzles and the at least one suction port must be led through the support plate.

In another embodiment, the gas sensors are nondispersive infrared sensors. Such gas sensors are readily available, inexpensive, very compact and robust, and thus, particularly suited for being used with the inspection system. Such gas sensors are available from, for example, Gas Sensing Solutions Ltd under the registered trade mark name "SprintIR".

In another embodiment, the inspection system further comprises a processing and evaluation unit configured to identify an area of a package where a gas leakage occurs based on readings of the gas sensors when the package is pressurized by the first and second pressure rollers, and optionally configured to display on a display device the identified area of a package where a gas leakage occurs. The more suction nozzles are provided, the higher is the spatial resolution of the gas detection. Preferably, the inspection system comprises the display device. The display device may, however, also be a mobile device wirelessly connectable to the processing and evaluation unit.

In another embodiment, the inspection system further comprises a drive system for driving the first and second shafts. Alternatively, the first and second shafts may not be driven by a drive system but actuated to rotate by the packages passing through.

The foregoing embodiments and attendant advantages will become more apparent from the description provided herein. It should be understood that the description and specific examples are intended for purposes of illustration only and are not intended to limit the scope of the present invention.

### DRAWINGS

The drawings described herein are for illustration purposes only and are not intended to limit the scope of the present invention in any way.
- Fig. 1A: is a schematic view of an inspection system in accordance with the present invention;
- Fig. 1B: is a schematic view of a bottom side of the inspection system of Fig. 1A;
- Fig. 2A: is a schematic view of the inspection system of Fig. 1A without a housing;
- Fig. 2B: is a schematic view of the inspection system of Fig. 1A without a housing and without first and second sensor units;
- Fig. 3: is a schematic view of a gas distribution plate of the inspection system of Fig. 1A;
- Fig. 4A: is longitudinal section of the gas distribution plate of Fig. 3 along a row of gas sensors;
- Fig. 4B: is a longitudinal section of the gas distribution plate of Fig. 3 along a connection passage; and
- Fig. 4C: is a transverse section of the gas distribution plate of Fig. 3.

### DETAILED DESCRIPTION

The following description is merely exemplary in nature and is not intended to limit the present invention, application, or uses. It should be understood that throughout the drawings, corresponding reference numerals indicate like or corresponding parts and features.

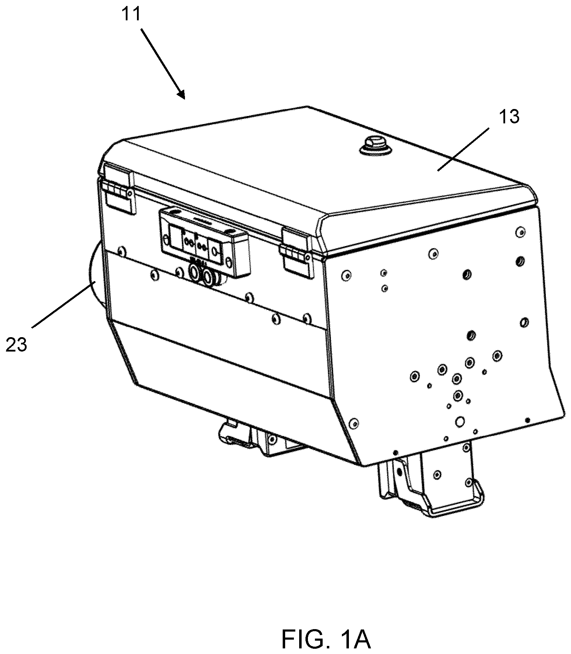

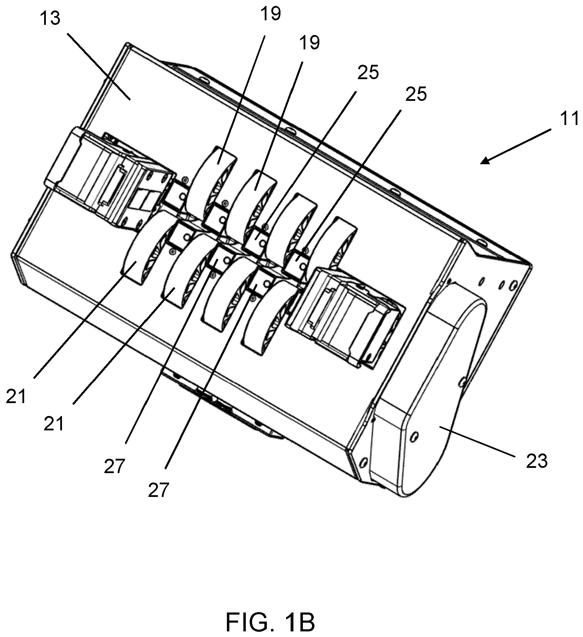

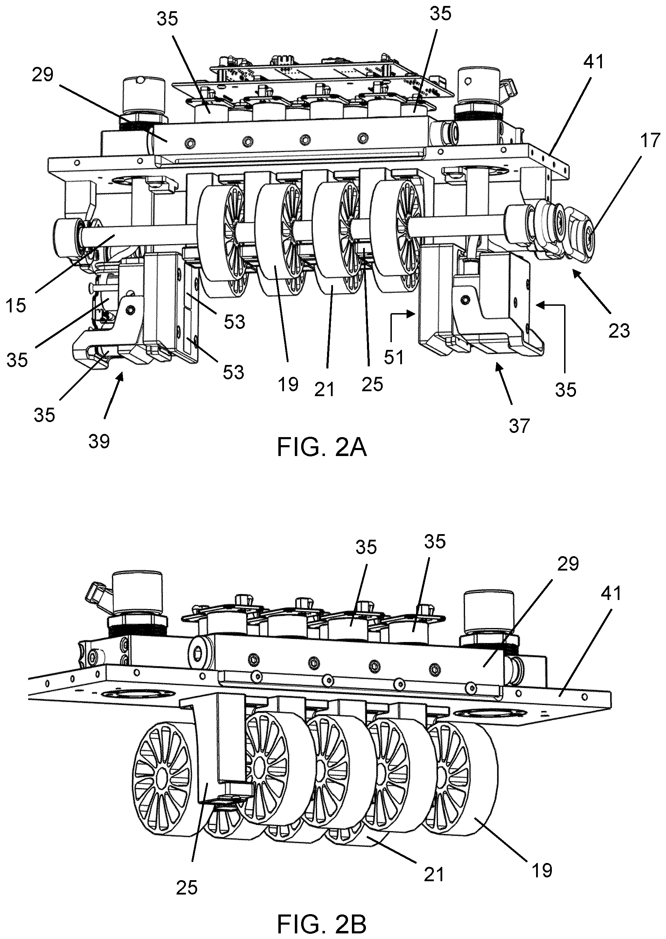

Referring now to Figs. 1A, 1B, 2A and 2B, an inspection system 11 for detecting gas leakage of sealed packages of food products is illustrated. A housing 13 of the inspection system 11 is omitted in Figs. 2A and 2B. The inspection system 11 comprises a first shaft 15 with a first axis and a second shaft 17 with a second axis. The shafts 15, 17 are arranged in parallel to each other. A plurality of first pressure rollers 19 are firmly joined to the first shaft 15 and spaced by first spaces from one another. A plurality of second pressure rollers 21 are firmly joined to the second shaft 17 and spaced by second spaces from one another. The first and second shafts 15, 17 are driven by a drive system 23.

The inspection system 11 further comprises a plurality of first suction nozzles 25 and a plurality of second suction nozzles 27. The first suction nozzles 25 and the first pressure rollers 19 are arranged in an alternating manner along the first shaft 15, i.e. they form a first alternating arrangement, wherein exactly one first suction nozzle 25 is arranged in each of the first spaces. Analogously, the second suction nozzles 27 and the second pressure rollers 21 are arranged in an alternating manner along the second shaft 17, i.e. they form a second alternating arrangement, wherein exactly one second suction nozzle 27 is arranged in each of the second spaces. As can be best seen in Fig. 1B, the first and second alternating arrangements are offset to each other with respect to the direction of the first and second axes, wherein each of the first pressure rollers 19 is aligned with a second suction nozzle 27 and each of the second pressure rollers 21 is aligned with a first suction nozzle 25 when viewed from a direction lying in a plane perpendicular to the direction of the first and second axes.

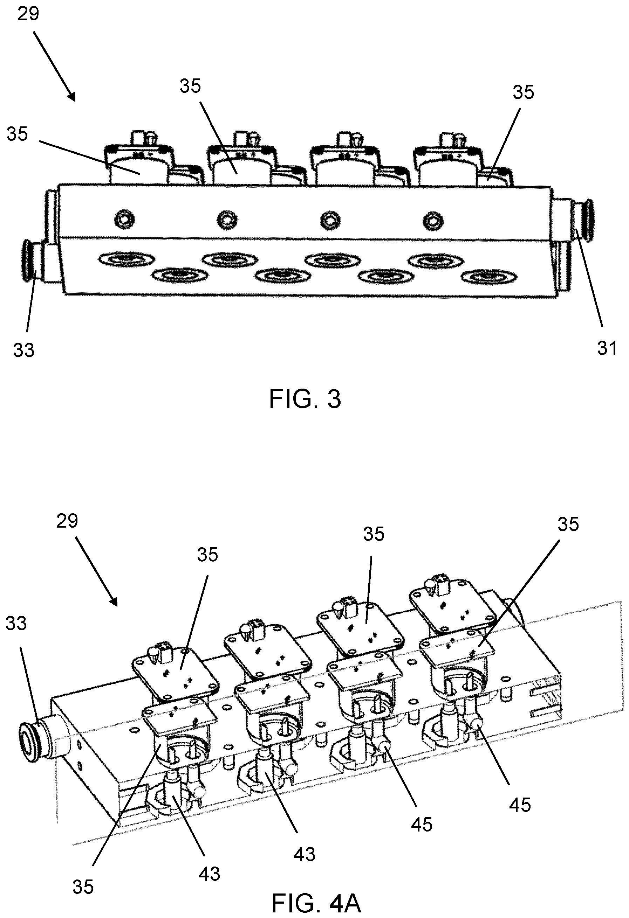

The inspection system 11 further comprises a gas distribution plate 29 (Fig. 3) that has an inner gas passage system that connects the first suction nozzles 25 to a first suction port 31 and that connects the second suction nozzles 27 to a second suction port 33. The first suction port 31 is attached to the gas distribution plate 29 at a first front side of the gas distribution plate 29, and the second suction port 33 is attached to the gas distribution plate 29 at a second front side of the gas distribution plate 29 opposite of the first front side. The first and second suction ports 31, 33 are connectable to a vacuum pump (not shown).

The inspection system 11 further comprises a plurality of gas sensors 35. The gas sensors 35 may be nondispersive infrared sensors, for example. The gas sensors 35 are interposed between the first and second suction ports 31, 33 and the first and second suction nozzles 31, 33, and are attached to an upper side of the gas distribution plate 29. Each of the first and second suction nozzles 31, 33 is associated with its own gas sensor 35.

The inspection system 11 further comprises a first sensor unit 37 and a second sensor unit 39. The first sensor unit 37 is arranged next to a first front side of the two alternating arrangements, and the second sensor unit 39 is arranged to a second front side of the two alternating arrangements opposite of the first front side. The first and second sensor units 37, 39 are arranged in extension of the first and second axis of the first and second shafts 15, 17. The first sensor unit 37 has two third suction nozzles 51 (not visible) connectable to the vacuum pump and two gas sensors 35 (not visible) associated with the third suction nozzles 51, and the second sensor unit 39 has two fourth suction nozzles 53 connectable to the vacuum pump and two gas sensors 35 associated with the fourth suction nozzles 53. The two third suction nozzles 51 and the two fourth suction nozzles are directed towards each other and are directed perpendicular to the first and second suction nozzles 25, 27. In total, all these suctions nozzles 25, 27, 51, 53 together form a U-shaped gate for the sealed packages. This allows the sealed packages to be inspected from three different directions.

The inspection system 11 further comprising a support plate 41. The first and second shafts 15, 17 with the first and second pressure rollers 19, 21, the first and second suction nozzles 25, 27, the gas distribution plate 29, and the first and second sensor units 37, 39 are all attached to the support plate 41. The gas distribution plate 29 sits on an upper side of the support plate 41, whereas the first and second shafts 15, 17 with the first and second pressure rollers 19, 21 and the first and second suction nozzles 25, 27 are arranged at a lower side of the support plate 41.

As mentioned above, the inspection system 11 is used for detecting gas leakage of sealed modified atmosphere packages of food products using gases such as carbon dioxide (CO2) and/or nitrogen (N2). If a modified atmosphere package is defective, the protective gas will leak from the package. Defective packages must be avoided since otherwise the food product will eventually be exposed to the environment outside the sealed tray package resulting in faster deterioration of the food product than predicated by its expiry date.

For this purpose, the inspection system 11 is arranged above a transportation system such as a conveyor configured to transport the sealed packages along a transport path in a transport direction (not shown). The first and second axis of the first and second shafts 15, 17 are arranged parallel to a surface of the transportation system and perpendicular to the transport direction. The inspection system 11 is oriented such that the first and second shafts 15, 17 with the first and second pressure rollers 19, 21 and the first and second suction nozzles 25, 27 are facing towards the transportation system. The height of the inspection system 11 above the transportation system is adjusted such that the distance between the transportation system and the first and second pressure rollers 19, 21 is slightly smaller than the height of the packages. Thus, when the packages are transported past the inspection system 11, the first and second pressure rollers 19, 21 contact and compress the packages from above to force out protective gas in case there is a leakage in a package. The first and second suction nozzles 25, 27 are provided for sucking in leaked gas which is then transferred to the gas sensors 35 which are configured for detecting the leaked gas.

As can be best seen in Fig. 1B, the first and second suction nozzles 25, 27 are funnel-shaped with a square inner and outer cross-section at the bottom and a round inner cross-section at the top to maximize the intake of leaked gas. Since each of the first and second suction nozzles 25, 27 is associated with its own gas sensor 35, it is possible to identify an area of a package where a gas leakage occurs based on readings of the gas sensors 35 and to display on a display device the identified area of a package where a gas leakage occurs. For this purpose, the inspection system 11 is provided with a corresponding processing and evaluation unit, and optionally with a display device (not shown).

The design of the gas distribution plate 29 having the inner gas passage system is shown in Figs. 3, 4A to 4C in more detail. The inner gas passage system comprises an own inlet passage 43 and an own outlet passage 45 for each gas sensor 35 (Fig. 4A). The inlet passages 43 allow the leaked gas to enter the gas sensors 35, and the outlet passages 45 allow the leaked gas to exit the gas sensors 35.

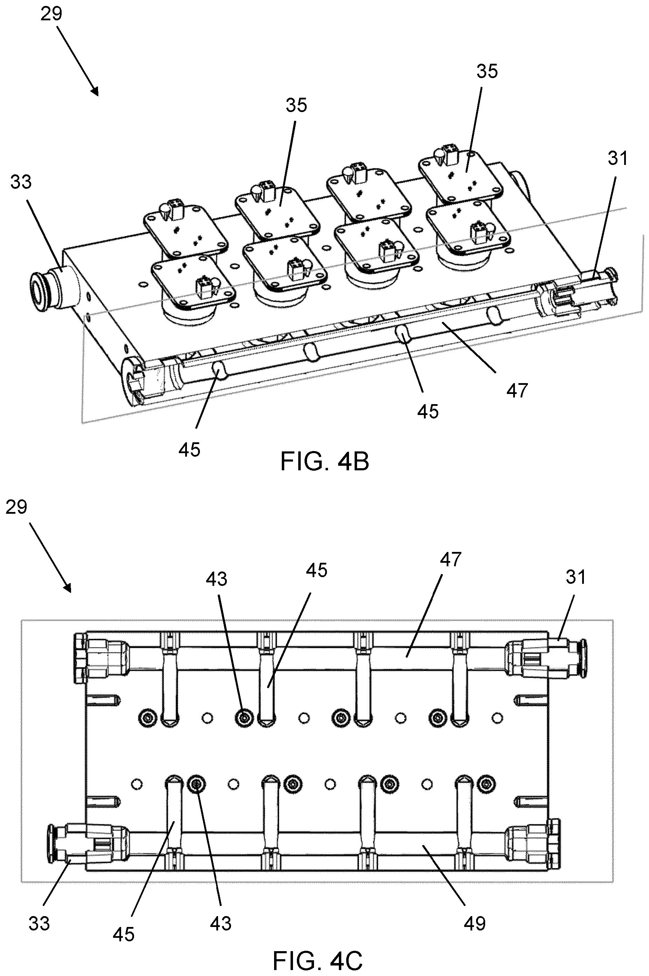

Each inlet passage 43 is connected to the first or second suction nozzle 25, 27 associated with the respective sensor 35. The outlet passages 45 connected to the gas sensors 35 associated with the first suction nozzles 25 are connected to the first suction port 31 via a first connecting passage 47 (Figs. 4B, 4C), and the outlet passages 45 connected to the gas sensors 35 associated with the second suction nozzles 27 are connected to the second suction port 33 via a second connecting passage 49 that is oriented in parallel to the first connecting passage 47 (Fig. 4C).

The inlet passages 43 are straight passages and oriented vertically. The first and second connecting passages 47, 49 are straight passages and oriented horizontally. The outlet passages 45 are L-formed passages, wherein first branches of the outlet passages 45 are oriented vertically and second branches of the outlet passages 45 are oriented horizontally.

As can be seen in Figs. 4A and 4C, the inlet and outlet passages 43, 45 connected to the gas sensors 35 associated with the first suction nozzles 25 are arranged in an alternating manner and lined up in a first row, and the inlet and outlet passages 43, 45 connected to the gas sensors 35 associated with the second suction nozzles 27 are arranged in an alternating manner and are lined up in a second row. Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, the specification and the following claims.

### Reference numeral list

- 11: inspection system
- 13: housing
- 15: first shaft
- 17: second shaft
- 19: first pressure roller
- 21: second pressure roller
- 23: drive system
- 25: first suction nozzle
- 27: second suction nozzle
- 29: gas distribution plate
- 31: first suction port
- 33: second suction port
- 35: gas sensor
- 37: first sensor unit
- 39: second sensor unit
- 41: support plate
- 43: inlet passage
- 45: outlet passage
- 47: first connecting passage
- 49: second connecting passage
- 51: third suction nozzle
- 53: fourth suction nozzle

## Claims

1. An inspection system for detecting gas leakage of sealed packages of food products, the inspection system comprising
a first shaft (15) having a first axis, and a plurality of first pressure rollers (19) fixedly mounted on the first shaft (15) and spaced by first spaces from one another,
a second shaft (17) arranged distant to the first shaft (15) and having a second axis arranged parallel to the first axis, and a plurality of second pressure rollers (21) fixedly mounted on the second shaft (17) and spaced by second spaces from one another,
at least one suction port (31, 33) connectable to a vacuum pump,
a plurality of first suction nozzles (25) connected to the at least one suction port (31, 33), the first suction nozzles (25) and the first pressure rollers (19) being arranged in an alternating manner along the first shaft (15) forming a first alternating arrangement with one first suction nozzle (25) being arranged in each of the first spaces,
a plurality of second suction nozzles (27) connected to the at least one suction port (31, 33), the second suction nozzles (27) and the second pressure rollers (21) being arranged in an alternating manner along the second shaft (17) forming a second alternating arrangement with one second suction nozzle (27) being arranged in each of the second spaces, and
a plurality of gas sensors (35) interposed between the at least one suction port (31, 33) and the first and second suction nozzles (25, 27) for detecting gas leakage of sealed packages of food products when the packages are pressurized by the first and second pressure rollers (19, 21),
wherein each of the first and second suction nozzles (25, 27) is associated with its own one of the gas sensors (35).

2. The inspection system of claim 1, wherein the first and second alternating arrangements are offset to each other with respect to the direction of the first and second axes such that each of the first pressure rollers (19) is aligned with a second suction nozzle (27) and each of the second pressure rollers (21) is aligned with a first suction nozzle (25) when viewed from a direction lying in a plane perpendicular to the direction of the first and second axes.

3. The inspection system of claim 1 or claim 2, further comprising a gas distribution plate (29) having an inner gas passage system that connects each of the first and second suction nozzles (25, 27) to the at least one suction port (31, 33).

4. The inspection system of claim 3, wherein the gas sensors (35) are attached to an upper side of the gas distribution plate (29), and wherein the inner gas passage system comprises, for each of the gas sensors (35), an inlet passage (43) connected to the respective gas sensor (35) and an outlet passage (45) connected to the respective gas sensor (35).

5. The inspection system of claim 4, wherein each inlet passage (43) is connected to the first or second suction nozzle (25, 27) associated with the respective gas sensor (35), and/or wherein all outlet passages (45) are connected to the at least one suction port (31, 33) via at least one connecting passage (47, 49).

6. The inspection system of claim 5, wherein the at least one suction port (31, 33) comprises a first suction port (31) and a second suction port (33), wherein the at least one connecting passage (47, 49) comprises a first connecting passage (47) and a second connecting passage (49), wherein the outlet passages (45) connected to the gas sensors (35) associated with the first suction nozzles (25) are connected to the first suction port (31) via the first connecting passage (47), and wherein the outlet passages (45) connected to the gas sensors (35) associated with the second suction nozzles (27) are connected to the second suction port (33) via the second connecting passage (49).

7. The inspection system of claim 6, wherein the first connecting passage (47) and the second connecting passage (49) are oriented in parallel to each other.

8. The inspection system of any one of claims 4 to 7, wherein the inlet and outlet passages (43, 45) connected to the gas sensors (35) associated with the first suction nozzles (25) are arranged in an alternating manner and lined up in a first row, and wherein the inlet and outlet passages (43, 45) connected to the gas sensors (35) associated with the second suction nozzles (27) are arranged in an alternating manner and are lined up in a second row.

9. The inspection system of any one of claims 6 to 8, wherein the first suction port (31) is attached to the gas distribution plate (29) at a first front side of the gas distribution plate (29) and the second suction port (33) is attached to the gas distribution plate (29) at a second front side of the gas distribution plate (29) opposite of the first front side.

10. The inspection system of any one of claims 4 to 9, wherein the inlet passages (43) and the at least one connecting passage (47, 49) are straight passages, and the outlet passages (45) are L-formed passages and/or wherein the inlet passages (43) are oriented vertically, the at least one connecting passage (47, 49) is oriented horizontally, and first branches of the outlet passages (45) are oriented vertically and second branches of the outlet passages (45) are oriented horizontally.

11. The inspection system of any one of the preceding claims, wherein each of the first and second suction nozzles (25, 27) is funnel-shaped, preferably with a rectangular, in particular square, inner and/or outer cross-section at the bottom and a round inner cross-section at the top.

12. The inspection system of any one of the preceding claims, further comprising a first sensor unit (37) having at least one third suction nozzle (51) connectable to the vacuum pump and at least one gas sensor (35) associated with the at least one third suction nozzle (51), and a second sensor unit (39) having at least one fourth suction nozzle (53) connectable to the vacuum pump and at least one gas sensor (38) associated with the at least fourth suction nozzle (53), the first sensor unit (37) and the second sensor unit (39) being arranged next to a first front side and next to a second front side opposite of the first front side, respectively, of the two alternating arrangements in extension of the first and second axis of the first and second shafts (15, 17), wherein the at least one third suction nozzle (51) and the at least one fourth suction nozzle (53) are directed towards each other and are directed perpendicular to the first and second suction nozzles (25, 27), wherein the first and second suctions nozzles (25, 27) and the at least one third suction nozzle (51) and the at least one fourth suction nozzle (53) together form a U-shaped gate for the sealed packages for allowing the sealed packages to be inspected from three directions.

13. The inspection system of any one of the preceding claims, further comprising a support plate (41) for the first alternating arrangement and the second alternating arrangement, and optionally for a gas distribution plate (29) and/or a first sensor unit (37) and a second sensor unit (39), wherein the first alternating arrangement and the second alternating arrangement, and optionally the first sensor unit (37) and the second sensor unit (39), are arranged at a lower side of the support plate (41), and optionally the distribution plate (29) is arranged at an upper side of the support plate (41).

14. The inspection system of any one of the preceding claims, wherein the gas sensors (35) are nondispersive infrared sensors.

15. The inspection system of any one of the preceding claims, further comprising a processing and evaluation unit configured to identify an area of a package where a gas leakage occurs based on readings of the gas sensors (35) when the package is pressurized by the first and second pressure rollers (19, 21), and optionally configured to display on a display device the identified area of a package where a gas leakage occurs.

16. The inspection system of any one of the preceding claims, further comprising a drive system (23) for driving the first and second shafts (15, 17).
